# EUROPEAN PATENT APPLICATION

(11) **EP 4 826 993 A1**
(43) Date of publication of application: **21.10.2026**
(21) Application number: 26718619.5
(22) Date of filing: 03.02.2026
(51) Int. Cl.: H02S 50/00

(54) **METHOD AND APPARATUS FOR OBTAINING CAUSE INFORMATION OF ABNORMALITY IN POWER GENERATION AMOUNT OF PHOTOVOLTAIC MODULE**

(30) Priority: 28.02.2025 KR 20250026537
(71) Applicant: Hanwha Solutions Corporation, Jung-gu Seoul 04541 (KR)
(72) Inventor: KIM, Mi So, Seoul 04541 (KR)
(74) Representative: Mooser, Sebastian Thomas
(86) International application number: PCT/KR2026/001936
(87) International publication number: WO 2026/182427

(57) **Abstract**

Provided is an apparatus for obtaining information on a cause of a power generation abnormality of a photovoltaic module, the apparatus including a memory in which at least one program is stored, and a processor configured to execute the at least one program, wherein the processor is configured to input a power generation abnormality cause prediction model, information on the photovoltaic module and information related to a sun into the power generation abnormality cause prediction model, determine whether a power generation abnormality of the photovoltaic module has occurred based on the information on the photovoltaic module and the information related to the sun, derive information on a cause of the power generation abnormality of the photovoltaic module based on a result of determining whether the power generation abnormality has occurred, and obtain from the power generation abnormality cause prediction model, the information on the cause of the power generation abnormality.

## Description

### Technical Field

The present disclosure relates to a method and apparatus for obtaining information on a cause of a power generation abnormality of a photovoltaic module.

### Background Art

Recently, as interest in eco-friendly energy technologies has increased, the number of installations of photovoltaic power generation systems has also increased.

However, due to the characteristics of photovoltaic power generation systems, unnecessary labor and time have often been wasted in determining whether an abnormality has occurred in a photovoltaic module and, when an abnormality has occurred, in identifying a cause of the abnormality.

In addition, when the power output of a photovoltaic module temporarily decreases, it has been difficult for a user to analyze a cause of the decrease in the power output of the photovoltaic module.

### Disclosure of Invention

### Technical Problem

The present disclosure is directed to providing a method and apparatus for obtaining information on a cause of a power generation abnormality of a photovoltaic module. The present disclosure is also directed to providing a computer-readable recording medium having recorded thereon a program for causing a computer to execute the method. The technical problems to be addressed are not limited to those described above, and other technical problems may be present.

### Solution to Problem

According to one aspect of the present disclosure, there is provided a method of obtaining information on a cause of a power generation abnormality of a photovoltaic module, the method including inputting, as input data to a power generation abnormality cause prediction model, information on a photovoltaic module and information related to a sun into the power generation abnormality cause prediction model, determining whether a power generation abnormality of the photovoltaic module has occurred based on the information on the photovoltaic module and the information related to the sun, deriving information on a cause of the power generation abnormality of the photovoltaic module based on a result of the determining of whether the power generation abnormality has occurred, and obtaining, as output data from the power generation abnormality cause prediction model, the information on the cause of the power generation abnormality.

According to another aspect of the present disclosure, there is provided an apparatus for obtaining information on a cause of a power generation abnormality of a photovoltaic module, the apparatus including a memory in which at least one program is stored, and at least one processor configured to execute the at least one program, wherein the at least one processor is configured to input, as input data to a power generation abnormality cause prediction model, information on the photovoltaic module and information related to a sun into the power generation abnormality cause prediction model, determine whether a power generation abnormality of the photovoltaic module has occurred based on the information on the photovoltaic module and the information related to the sun, derive information on a cause of the power generation abnormality of the photovoltaic module based on a result of determining whether the power generation abnormality has occurred, and obtain, as output data from the power generation abnormality cause prediction model, the information on the cause of the power generation abnormality.

According to another aspect of the present disclosure, there is provided a computer-readable recording medium having recorded thereon a program for causing a computer to execute the method.

### Advantageous Effects of Invention

A cause of a decrease in power generation of a photovoltaic module can be accurately analyzed and predicted based on time-based power generation data of the photovoltaic module by using information on a position of the sun, an installation angle of the photovoltaic module, and environmental information of a region in which the photovoltaic module is installed.

A cause of a decrease in power generation of a photovoltaic module can be identified remotely.

However, the effects according to embodiments are not limited to the above-mentioned effects, and other effects not mentioned may be clearly understood by those skilled in the art from the description of the present disclosure.

### Brief Description of Drawings

FIG. 1 is a diagram for describing an example of a power supply system according to an embodiment;
FIG. 2 is a block diagram for describing an example of an apparatus for obtaining information on a cause of a power generation abnormality of a photovoltaic module according to an embodiment;
FIG. 3 is a flowchart for describing an example of a method of obtaining information on a cause of a power generation abnormality of a photovoltaic module according to an embodiment;
FIG. 4 is a diagram for describing an example of a method of obtaining information on a cause of a power generation abnormality of a photovoltaic module using a power generation abnormality cause prediction model according to an embodiment;
FIG. 5 is a diagram for describing an example of information on a photovoltaic module and information related to the sun according to an embodiment;
FIG. 6 is a diagram for describing an example of a method of determining whether a power generation abnormality has occurred in a photovoltaic module according to an embodiment;
FIG. 7 is a diagram for describing an example of a method of deriving a cause of a power generation abnormality of a photovoltaic module according to an embodiment; and
FIG. 8 is a diagram for describing an example of a method of providing, to a user, a notification according to a cause of a power generation abnormality of a photovoltaic module according to an embodiment.

### Best Mode for Carrying out the Invention

Provided is an apparatus for obtaining information on a cause of a power generation abnormality of a photovoltaic module, the apparatus including a memory in which at least one program is stored, and at least one processor configured to execute the at least one program, wherein the at least one processor is configured to input, as input data to a power generation abnormality cause prediction model, information on the photovoltaic module and information related to a sun into the power generation abnormality cause prediction model, determine whether a power generation abnormality of the photovoltaic module has occurred based on the information on the photovoltaic module and the information related to the sun, derive information on a cause of the power generation abnormality of the photovoltaic module based on a result of determining whether the power generation abnormality has occurred, and obtain, as output data from the power generation abnormality cause prediction model, the information on the cause of the power generation abnormality.

### Mode for the Invention

The terms used in the embodiments are, where possible, selected from general terms that are currently widely used, but may vary depending on the understanding and practices of those of ordinary skill in the art, judicial precedents (case law), or the emergence of new technologies. In addition, in particular cases, the applicant may arbitrarily select terms, and in such cases, the meanings of the terms will be described in detail in the corresponding parts. Accordingly, the terms used herein should be construed based on their meanings and the contents throughout the specification, rather than by their mere names.

Throughout the specification, when a part is said to "include" a certain component, this does not mean that other components are excluded, but that other components can be further included, unless specifically stated otherwise. In addition, terms such as "unit," "module," and the like described in the specification denote a unit that processes at least one function or operation, which may be implemented in hardware or software, or implemented in a combination of hardware and software.

In addition, terms including ordinal numbers such as "first" and "second" used herein may be used to describe various components, but the components are not limited by these terms. Rather, these terms are used only to distinguish one component from another. These terms may be used for the purpose of distinguishing one component from another component.

Hereinafter, the present disclosure will be described in detail with reference to the accompanying drawings. However, the embodiments may be implemented in many different forms and are not limited to the examples that will be described below.

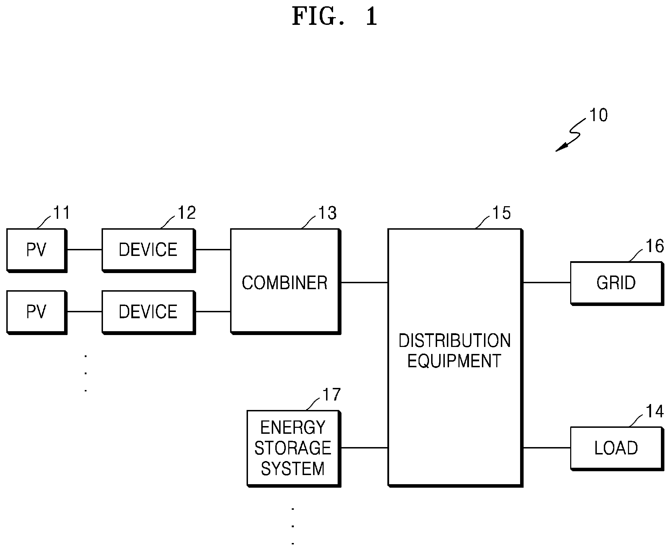

FIG. 1 is a diagram for describing an example of a power supply system according to an embodiment.

Hereinafter, the example of the power supply system will be described with reference to FIG. 1.

Referring to FIG. 1, a power supply system 10 may include a photovoltaic module 11, a device 12, a load 14, and/or distribution equipment 15. The power supply system 10 may be connected to an external power grid 16.

At least one photovoltaic module 11 may be installed on a roof, an exterior wall, or the like of a building to generate power. A plurality of photovoltaic modules 11 may be connected to form a photovoltaic module array.

The photovoltaic module 11 may be connected to the device 12. For example, at least one device 12 may be connected to each photovoltaic module 11. As an example, when one device 12 is connected to each photovoltaic module 11, the number of devices 12 included in the power supply system 10 may be the same as the number of photovoltaic modules 11.

The device 12 may be a power conditioning system (PCS) (also referred to as a power conversion system) configured to perform power conversion on power generated by the photovoltaic module 11. For example, the device 12 may perform a predetermined conversion on the power generated by the photovoltaic module 11 and supply the converted power to other components of the power supply system 10 (for example, the power grid 16 and/or the load 14).

In an embodiment, the device 12 may be module-level power electronics (MLPE). For example, the device 12 may be an optimizer or a micro inverter (MI).

As an example, when the device 12 is an optimizer, the device 12 may regulate power generated by the photovoltaic module 11 and output the regulated power to an inverter (for example, a string inverter). Current converted by the inverter (for example, converted from direct current (DC) to alternating current (AC)) may be supplied to the power grid 16 or the load 14.

As another example, when the device 12 is a micro inverter, the device 12 may convert power generated by the photovoltaic module 11 (for example, DC to AC). Current converted by the device 12 may be output to the power grid 16 or the load 14.

As needed, the power supply system 10 may further include a combiner 13. At least some of the devices 12 may be connected to the distribution equipment 15 through the combiner 13. For example, power output from a plurality of devices 12 may be combined by the combiner 13 into a single output and supplied to the distribution equipment 15.

In some embodiments, the device 12 and the distribution equipment 15 may be connected through a power path that does not include the combiner 13. For example, at least one device 12 may be connected to the distribution equipment 15 through the power path that does not include the combiner 13, and at least one other device 12 may be connected to the distribution equipment 15 through the combiner 13.

The combiner 13 may control a voltage, a current, and/or power output from the device 12 based on a power supply status of the photovoltaic module 11, the device 12, and/or the power grid 16, and an operating mode of the combiner 13 may be set to a diagnostic mode, an operation mode, or the like.

In an embodiment, the combiner 13 may include an energy management system (EMS) configured to control operation of the combiner 13. The EMS may control a voltage, a current, and/or power supplied to the combiner 13 or output from the combiner 13 based on the power supply status of the photovoltaic module 11, the device 12, and/or the power grid 16, and may set the operating mode of the combiner 13 to the diagnostic mode, the operation mode, or the like.

The load 14 may refer to an object installed at a power consumer site, such as a residential building, a commercial facility, or a factory, and configured to operate using at least one of energy generated by the photovoltaic module 11, energy stored in the energy storage system 17, and/or energy supplied from the power grid 16. For example, when the power consumer site that receives power is a residential building, the load 14 may include home appliances such as a washing machine, a refrigerator, or a television (TV).

The power grid 16 may include an infrastructure system for generating, transmitting, and distributing power. For example, the power grid 16 may include infrastructure systems such as power plants, substations, and power line networks. In some embodiments, the power grid 16 may deliver electric energy generated at a power plant to the power supply system 10, or may deliver surplus power generated by the power supply system 10 to outside of the power supply system 10.

For example, commercial power transmitted from the power grid 16 through utility poles may be supplied to a power consumer site through a transformer. In some embodiments, the power supply system 10 may be implemented as an off-grid system that is not connected to the power grid 16.

In some embodiments, the power supply system 10 may further include at least one energy storage system 17. As needed, the power supply system 10 may include a plurality of energy storage systems 17. The energy storage system 17 may receive and store power generated by the photovoltaic module 11 and/or power delivered from the power grid 16. The energy storage system 17 may store power and supply the stored power to the load 14 when required, thereby enabling efficient power supply.

The energy storage system 17 may include a battery configured to store power and a power conversion module. The battery may include a battery management system (BMS) configured to monitor a state of charge (SOC), a state of health (SOH), a voltage, and/or a current of the battery, perform diagnostics on the battery, and perform safety functions such as current interruption.

In an embodiment, the power conversion module may be a PCS configured to perform conversion between battery-side power and grid-side power. For example, the PCS may perform conversion between battery-side DC current and grid-side AC current. As an example, the PCS may include a bidirectional DC-DC converter connected to the battery and configured to perform voltage conversion, and a bidirectional inverter that connects the DC-DC converter to an external side of the energy storage system 17.

In an embodiment, the energy storage system 17 may further include an energy management system (EMS) configured to control operation of the energy storage system 17. The EMS may control a voltage, a current, and/or power supplied to the energy storage system 17 or output from the energy storage system 17 based on a power supply status of the battery and/or the power grid 16, and may set an operating mode of the energy storage system 17 to a diagnostic mode, an operation mode, or the like.

As needed, an EMS coupled to a particular component of the power supply system 10 may control operation of the particular component and may further control operations of other components of the power supply system 10. For example, an EMS coupled to the combiner 13 or an EMS coupled to the energy storage system 17 may control operation of both the combiner 13 and the energy storage system 17.

In some embodiments, the distribution equipment 15 may provide electrical connections among components of the power supply system 10 and may control a power flow of the power supply system 10. For example, the distribution equipment 15 may electrically connect the photovoltaic module 11 to the load 14. As an example, the distribution equipment 15 may be connected to the device 12, which is connected to the photovoltaic module 11, thereby electrically connecting the photovoltaic module 11 to the load 14. As needed, the distribution equipment 15 may be further connected to at least one of the energy storage system 17 and the power grid 16.

For example, the distribution equipment 15 may be a distribution panel that distributes power within the power supply system 10. As an example, the distribution equipment 15 may be a master service panel (MSP) that distributes power generated by the photovoltaic module 11 to the load 14 and the like.

In another example, the distribution equipment 15 may be a main controller that performs power distribution within the power supply system and controls each of the devices 12. As an example, the main controller may include switches, circuit breakers, and a control unit. The switches, the circuit breakers, and the control unit may each be implemented as independent devices, or at least some of the switches, the circuit breakers, and the control unit may be integrated into a single device.

The main controller may include a switch configured to control electrical connections among components connected to the main controller, such as the device 12 and the load 14. For example, the main controller may include a relay, a power semiconductor device, or the like that provides or blocks an electrical connection to the device 12 and/or the energy storage system 17 depending on operating states of components of the power supply system 10.

The main controller may perform a rapid shutdown to stop power generation by the photovoltaic module 11 in an emergency situation, such as an overcurrent occurring in the power supply system 10. To this end, the main controller may include a circuit breaker configured to block a connection between the device 12 and the load 14.

The main controller may include a control unit configured to control overall operation of the main controller. The control unit may control operations of other components (e.g., the device 12 or the energy storage system 17) of the power supply system 10, in addition to operation of the main controller.

The control unit may control a voltage, a current, and/or power output from, or supplied to, each component based on a power supply status of the photovoltaic module 11, the device 12, the combiner 13, the load 14, the power grid 16, and/or the energy storage system 17. In an embodiment, the control unit may set operating modes of the main controller, the device 12, and/or the energy storage system 17 to a diagnostic mode, an operation mode, or the like.

For example, the control unit may control the photovoltaic module 11, the device 12, the combiner 13, and/or the energy storage system 17 based on a status of the power supply system 10. As an example, the control unit may control other components of the power supply system 10 by enabling the main controller to communicate with the other components of the power supply system 10 (for example, the device 12). Communication between the main controller and the other components of the power supply system 10 may be performed using a power line communication (PLC) scheme, but the present disclosure is not limited thereto.

As an example, the control unit may control the device 12 based on a power generation status of the photovoltaic module 11. For example, the main controller may receive a control command from a server that monitors the power generation status of the photovoltaic module 11, and the control unit may control the device 12 according to the control command.

When power supply from the power grid 16 is unavailable or unstable (for example, in an off-grid situation), the main controller may supply power to at least some of the loads 14. For example, when power supply from the power grid 16 is unavailable or unstable, the main controller may preferentially supply power generated by the photovoltaic module 11 and/or power stored in the energy storage system 17 to backup loads having a relatively higher need for stable power supply.

In some embodiments, the power supply system 10 may further include an auxiliary generation device configured to generate power by a method other than photovoltaic power generation (for example, a diesel generator). For example, the auxiliary generation device may be further connected to the distribution equipment 15. When the photovoltaic module 11 and the energy storage system 17 cannot adequately supply the backup loads due to environmental factors such as a time of day or weather, the main controller may supply power generated by the auxiliary generation device to the backup loads.

The control unit may be implemented using at least one processor. The processor may process instructions of a computer program by performing basic arithmetic, logic, and input/output operations. The instructions may be provided from an internal memory of the main controller or from an external device. The processor may control overall operations of other components included in the main controller.

In some embodiments, the processor may perform at least a part of data analysis, processing, and generation of result information for performing the above-described operations using at least one of a rule-based method or an artificial intelligence algorithm, such as machine learning, a neural network, or a deep learning algorithm. Examples of the neural network may include neural network models based on architectures such as a convolutional neural network (CNN), a deep neural network (DNN), and a recurrent neural network (RNN).

For example, the processor may be implemented as an array of a plurality of logic gates, or as a combination of a general-purpose microprocessor and a memory storing a program executable by the microprocessor. For example, the processor may include a general-purpose processor, a central processing unit (CPU), a microprocessor, a digital signal processor (DSP), a controller, a microcontroller, a state machine, or the like.

In some environments, the processor may include an application-specific integrated circuit (ASIC), a programmable logic device (PLD), a field-programmable gate array (FPGA), or the like. For example, the processor may be implemented as a combination of processing devices, such as a combination of a DSP and a microprocessor, a combination of a plurality of microprocessors, a combination of one or more microprocessors coupled with a DSP core, or any other such combinations.

By combining at least some of the above-described components, the power supply system 10 may be implemented in various forms.

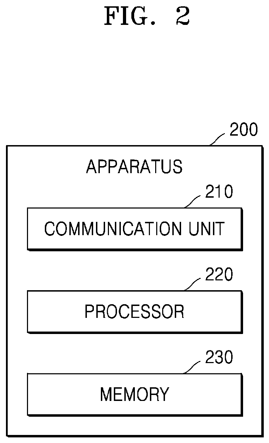

FIG. 2 is a block diagram for describing an example of an apparatus for obtaining information on a cause of a power generation abnormality of a photovoltaic module according to an embodiment.

Referring to FIG. 2, an apparatus 200 for obtaining information on a cause of a power generation abnormality of a photovoltaic module (hereinafter referred to as "apparatus 200") may include a communication unit 210, a processor 220, and a memory 230. In FIG. 2, only components related to the embodiment are illustrated in the apparatus 200. Accordingly, it will be apparent to those of ordinary skill in the art that other general-purpose components may be further included in addition to the components illustrated in FIG. 2.

The communication unit 210 may include one or more components configured to enable wired and/or wireless communication with an external server or an external device. For example, the communication unit 210 may include a short-range communication unit (not shown) and a mobile communication unit (not shown) for communication with the external server or the external device.

The processor 220 may control overall operation of the apparatus 200. For example, by executing programs stored in the memory 230, the processor 220 may control overall operation of an input unit (not shown), a display (not shown), the communication unit 210, the memory 230, and the like.

The processor 220 may be implemented using at least one of application-specific integrated circuits (ASICs), digital signal processors (DSPs), digital signal processing devices (DSPDs), programmable logic devices (PLDs), field-programmable gate arrays (FPGAs), controllers, microcontrollers, microprocessors, and/or other electronic components configured to perform functions.

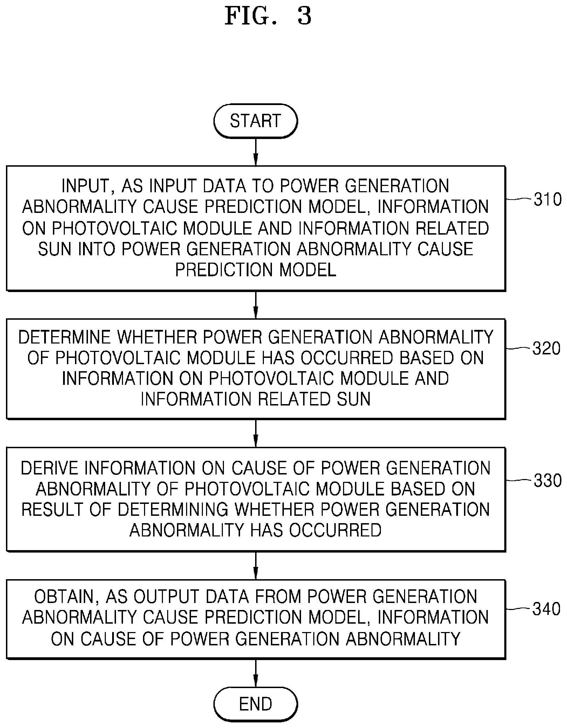

The processor 220 may control operation of the apparatus 200 by executing programs stored in the memory 230. For example, the processor 220 may perform at least a part of the method of obtaining information on a cause of a power generation abnormality of a photovoltaic module, as described with reference to FIGS. 3 to 8.

The memory 230 may be hardware that stores various types of data processed in the apparatus 200, and may store programs for processing and control performed by the processor 220.

For example, the memory 230 may store various types of data, such as information related to the sun, position information of the sun, solar irradiance data, installation location information and installation angle information of the photovoltaic module, power generation, environmental information, temperature, current power, predicted power consumption, stored power, transferred power, consumed power, and other power-related information, weather information such as wind speed, rainfall amount, snowfall amount, and sunrise/sunset times, and data generated during operation of the processor 220. For example, the memory 230 may store an operating system (OS) and at least one program (for example, a program required for the operation of the processor 220).

The memory 230 may include random access memory (RAM), such as dynamic random access memory (DRAM) and static random access memory (SRAM), read-only memory (ROM), electrically erasable programmable read-only memory (EEPROM), compact disc read-only memory (CD-ROM), a Blu-ray disc or other optical disc storage medium, a hard disk drive (HDD), a solid state drive (SSD), or flash memory.

FIG. 3 is a flowchart for describing an example of a method of obtaining information on a cause of a power generation abnormality of a photovoltaic module according to an embodiment.

Referring to FIG. 3, the method of obtaining information on a cause of a power generation abnormality of a photovoltaic module may include operations 310 to 340. However, the present disclosure is not limited thereto, and other general-purpose operations may further be included in the method of obtaining information on a cause of a power generation abnormality of a photovoltaic module, in addition to the operations illustrated in FIG. 3. In an embodiment, as described above with reference to FIGS. 1 and 2, at least one of the operations illustrated in the flowchart of FIG. 3 may be performed by the processor.

First, in operation 310, the processor may input, as input data to a power generation abnormality cause prediction model, information on the photovoltaic module and information related to the sun into the power generation abnormality cause prediction model. Here, the information on the photovoltaic module may include installation location information, installation angle information, and power generation data of the photovoltaic module, and the information related to the sun may include position information of the sun and solar irradiance data.

For example, the processor may obtain installation location information of the photovoltaic module from the photovoltaic module, and may calculate position information of the sun and solar irradiance data based on the installation location information of the photovoltaic module.

For example, training of the power generation abnormality cause prediction model may be performed by preprocessing for adjusting information on the photovoltaic module and information related to the sun to the same scale, and training the power generation abnormality cause prediction model to derive information on the cause of the power generation abnormality using the preprocessed information on the photovoltaic module and the preprocessed information related to the sun as training data for the power generation abnormality cause prediction model.

In an embodiment, the processor may input the information on the photovoltaic module, position information of the sun, and the solar irradiance data into the power generation abnormality cause prediction model.

In operation 320, the processor may determine whether a power generation abnormality has occurred in the photovoltaic module based on the information on the photovoltaic module and the information related to the sun.

For example, the processor may derive a power generation variation pattern of the photovoltaic module over time based on the information on the photovoltaic module and the information related to the sun, and may determine whether the power generation abnormality has occurred in the photovoltaic module using the power generation variation pattern.

In operation 330, the processor may derive information on a cause of the power generation abnormality based on a result of determining whether the power generation abnormality has occurred.

For example, the processor may derive a cause of the power generation abnormality based on a result of determining whether the power generation abnormality has occurred, and may obtain information on the cause of the power generation abnormality based on the derived cause of the power generation abnormality.

In an embodiment, the processor may visualize power generation data included in the information on the photovoltaic module based on an arrangement of the photovoltaic modules, and may derive the information on the cause of the power generation abnormality based on the visualized power generation data.

In operation 340, the processor may obtain, as output data from the power generation abnormality cause prediction model, the information on the cause of the power generation abnormality.

In an embodiment, the processor may provide a notification to a user according to the cause of the power generation abnormality of the photovoltaic module based on the information on the cause of the power generation abnormality. Here, the cause of the power generation abnormality of the photovoltaic module may include a first cause related to an obstacle, a second cause related to weather, and a third cause related to an error of the photovoltaic module.

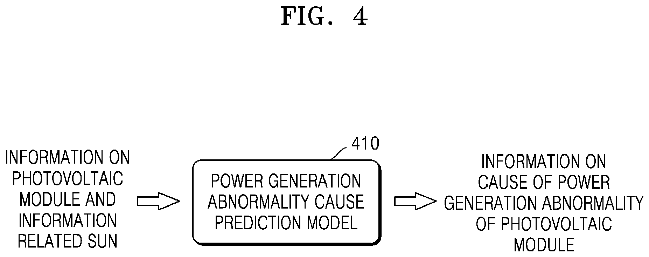

FIG. 4 is a diagram for briefly describing an example of a method of obtaining information on a cause of a power generation abnormality of a photovoltaic module using a power generation abnormality cause prediction model according to an embodiment.

Hereinafter, an example of a method by which the processor obtains the information on the cause of the power generation abnormality will be briefly described with reference to FIG. 4.

Referring to FIG. 4, the processor may obtain information on the cause of the power generation abnormality of the photovoltaic module using a power generation abnormality cause prediction model 410.

For example, the processor may input, as input data to the power generation abnormality cause prediction model 410, information on the photovoltaic module and information related to the sun into the power generation abnormality cause prediction model. In an embodiment, the processor may obtain, as output data from the power generation abnormality cause prediction model 410, the information on the cause of the power generation abnormality of the photovoltaic module.

For example, the processor may derive a cause of a power generation abnormality of the photovoltaic module using the information on the photovoltaic module and the information related to the sun. That is, the processor may determine whether an abnormality has occurred in power generation of the photovoltaic module, and may derive a cause of the abnormality based on a result of determining whether the power generation abnormality has occurred.

In some embodiments, the power generation abnormality cause prediction model 410 may be trained to derive the information on the cause of the power generation abnormality of the photovoltaic module using the information on the photovoltaic module and the information related to the sun. The training of the power generation abnormality cause prediction model 410 may be performed by the processor or by another device.

For example, the training of the power generation abnormality cause prediction model 410 may be performed by preprocessing for adjusting the information on the photovoltaic module and the information related to the sun to the same scale, and training the power generation abnormality cause prediction model 410 to derive the information on the cause of the power generation abnormality using the preprocessed information on the photovoltaic module and the preprocessed information related to the sun as training data for the power generation abnormality cause prediction model 410, as will be described in detail below.

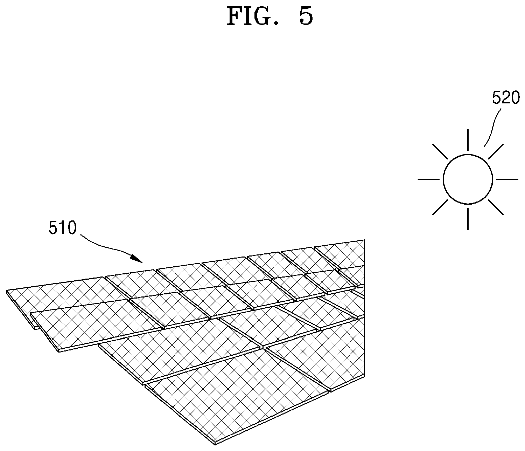

FIG. 5 is a diagram for describing an example of information on a photovoltaic module and information related to the sun according to an embodiment.

Hereinafter, an example of a method by which the processor obtains information on a photovoltaic module and information related to the sun, and uses the obtained information will be described with reference to FIG. 5.

Referring to FIG. 5, the processor may calculate information related to the sun 520 using information on a photovoltaic module 510.

For example, the information on the photovoltaic module 510 may include installation location information of the photovoltaic module 510, installation angle information of the photovoltaic module 510, arrangement information of a plurality of photovoltaic modules 510 included in a photovoltaic panel, and power generation data, and the information related to the sun 520 may include position information of the sun 520 and solar irradiance data.

First, the processor may obtain the information on the photovoltaic module 510. As an example, the processor may obtain, in real time from the photovoltaic module 510, the installation location information of the photovoltaic module 510, the installation angle information of the photovoltaic module 510, and the arrangement information of the plurality of photovoltaic modules 510 included in the photovoltaic panel. As another example, the processor may obtain, from a memory, installation location information of the photovoltaic module 510, installation angle information of the photovoltaic module 510, and arrangement information of the plurality of photovoltaic modules 510 included in the photovoltaic panel, which were stored when the photovoltaic modules 510 were installed.

For example, the processor may obtain power generation data of the photovoltaic module 510 from the photovoltaic module 510, and the power generation data may be real-time data or data obtained at predetermined time intervals, but the present disclosure is not limited thereto.

For example, the processor may obtain the information related to the sun 520 using the information on the photovoltaic module 510. That is, the processor may obtain the information related to the sun 520 based on a location at which the photovoltaic module 510 is installed.

For example, the processor may obtain the information related to the sun 520 based on latitude and longitude of a region in which the photovoltaic module 510 is installed, and a date and time at which the information related to the sun 520 is obtained. More specifically, the processor may obtain position information of the sun 520 and time-dependent solar irradiance data by using an astronomical library, a solar position application programming interface (API), a weather data API, or the like, based on the latitude and longitude of the region in which the photovoltaic module 510 is installed and the date and the time at which the information related to the sun 520 is obtained.

Here, an API may refer to an interface through which one program provides services or functions to another program. Accordingly, the processor may obtain the position information of the sun 520 and the time-dependent solar irradiance data from another computer program. For example, the position information of the sun 520 may be obtained using altitude and azimuth.

Accordingly, the processor may input the information on the photovoltaic module 510 and the information related to the sun 520 into the power generation abnormality cause prediction model.

In some embodiments, training of the power generation abnormality cause prediction model may be performed using the information on the photovoltaic module 510 and the information related to the sun 520 as described above.

In some embodiments, training of the power generation abnormality cause prediction model may be performed by preprocessing for adjusting the information on the photovoltaic module 510 and the information related to the sun 520 to the same scale, and training the power generation abnormality cause prediction model to derive information on the cause of the power generation abnormality using the preprocessed information on the photovoltaic module 510 and the preprocessed information related to the sun 520 as training data for the power generation abnormality cause prediction model.

For example, data included in the information on the photovoltaic module 510 and data included in the information related to the sun 520 may be adjusted to the same scale through a normalization process. That is, since the data may be represented in different manners, the data may be adjusted to the same scale through the normalization process.

For example, due to communication errors, sensor errors, or the like, missing values may exist in the data. In this case, the missing values may be filled using temporal interpolation. Here, temporal interpolation may refer to a method of supplementing continuous time-series data in which a value at a missing time is estimated using data before and after the missing time. Accordingly, missing values in the data included in the information on the photovoltaic module 510 and the information related to the sun 520 may be filled using temporal interpolation.

In an embodiment, the data may be organized as time-series data and combined into a vector to be used as training data for the power generation abnormality cause prediction model. The power generation abnormality cause prediction model may be trained to determine whether a power generation abnormality has occurred in the photovoltaic module 510 using the data preprocessed in the above-described manner as training data, and to derive a cause of the power generation abnormality based on a determination result. Here, the power generation abnormality cause prediction model may include an artificial intelligence model for analyzing time-series data and an artificial intelligence model for analyzing spatial data.

Accordingly, the processor may determine whether a power generation abnormality has occurred in the photovoltaic module 510 by using the power generation abnormality cause prediction model. For example, the processor may derive a cause of the power generation abnormality of the photovoltaic module 510 based on a result of determining whether the power generation abnormality has occurred.

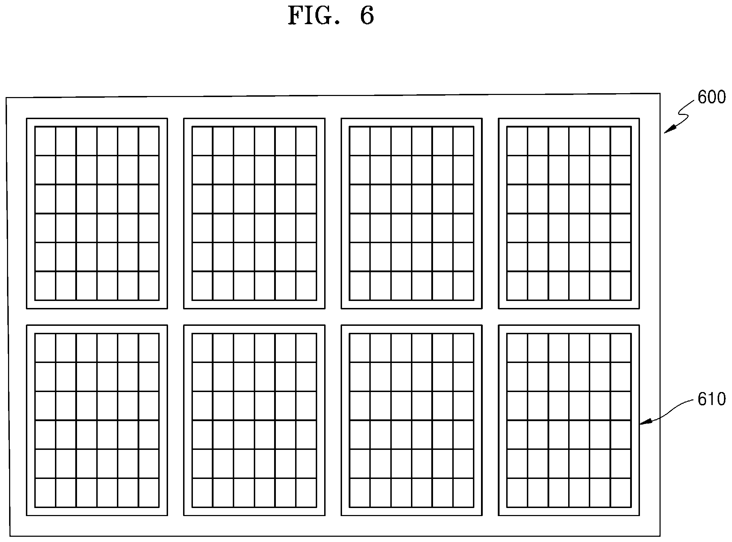

FIG. 6 is a diagram for describing an example of a method of determining whether a power generation abnormality has occurred in a photovoltaic module according to an embodiment.

Hereinafter, an example of a method by which the processor determines whether a power generation abnormality has occurred in a photovoltaic module will be described with reference to FIG. 6.

Referring to FIG. 6, the processor may determine whether a power generation abnormality has occurred in each photovoltaic module 610 included in a plurality of photovoltaic modules 600 by using power generation data of the photovoltaic module 610.

For example, the processor may derive a power generation variation pattern of the photovoltaic module 610 using information on the photovoltaic module 610.

For example, the processor may predict a power generation variation pattern of the photovoltaic module 610 over time based on time-series power generation data of the photovoltaic module 610 included in the information on the photovoltaic module 610 and sun position data and solar irradiance data included in information related to the sun.

In an embodiment, the processor may determine whether a power generation abnormality has occurred in the photovoltaic module 610 using the predicted power generation variation pattern of the photovoltaic module 610 over time.

As an example, the processor may determine whether a power generation abnormality has occurred in the photovoltaic module 610 by comparing the predicted power generation variation pattern of the photovoltaic module 610 over time with a power generation variation pattern obtained for a preset period prior to a time at which the power generation variation pattern is predicted. That is, when a difference between the predicted power generation variation pattern and a power generation variation pattern obtained for a predetermined period prior to the prediction time is greater than or equal to a preset value, the processor may determine that a power generation abnormality has occurred in the photovoltaic module 610.

As another example, the processor may determine whether a power generation abnormality has occurred in the photovoltaic module 610 by comparing the predicted power generation variation pattern of the photovoltaic module 610 over time with an actually measured power generation variation pattern of the photovoltaic module 610 over time. That is, when a difference between the predicted power generation variation pattern and the actually measured power generation variation pattern is greater than or equal to a preset value, the processor may determine that a power generation abnormality has occurred in the photovoltaic module 610.

For example, the processor may derive a cause of the power generation abnormality of the photovoltaic module 610 based on a result of determining that the power generation abnormality has occurred in the photovoltaic module 610.

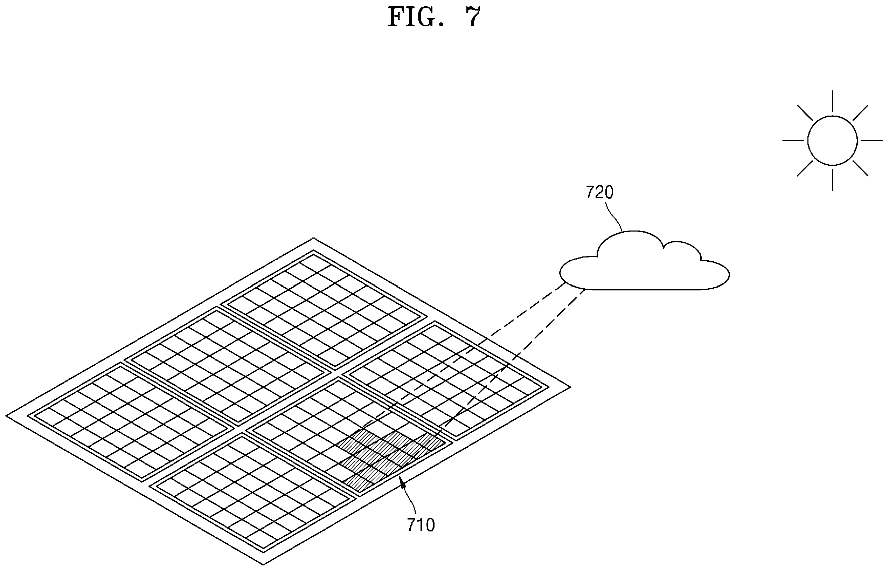

FIG. 7 is a diagram for describing an example of a method of deriving a cause of a power generation abnormality of a photovoltaic module according to an embodiment.

Hereinafter, an example of a method by which the processor derives a cause of a power generation abnormality of a photovoltaic module will be described with reference to FIG. 7.

Referring to FIG. 7, the processor may derive a cause of a power generation abnormality of a photovoltaic module 710 based on a result of determining that a power generation abnormality has occurred in the photovoltaic module 710.

For example, when there is no abnormality in time-dependent solar irradiance, and power generation of at least some of a plurality of photovoltaic modules 710 decreases, the processor may determine that the cause of the power generation abnormality of the photovoltaic module 710 is attributable to an obstacle 720. That is, although there is no abnormality in time-dependent solar irradiance, when sunlight is blocked by an obstacle, power generation of the photovoltaic module 710 may decrease, and thus the processor may determine that the cause of the power generation abnormality of the photovoltaic module 710 is attributable to the obstacle.

For example, when at least one photovoltaic module among the plurality of photovoltaic modules 710, whose power generation has decreased, is included in a shadow formed by the obstacle 720, the processor may determine that the cause of the power generation abnormality of the photovoltaic module 710 is attributable to the obstacle. Here, although the obstacle 720 is illustrated in FIG. 7 only as a cloud for convenience of description, the obstacle 720 is not limited thereto and may include any object capable of affecting the power generation of the photovoltaic module 710, such as a tree, a bird, or a building.

For example, even when power generation of at least some of the plurality of photovoltaic modules 710 decreases, when there exists a factor such as a weather change that reduces power generation of the photovoltaic modules 710, the processor may determine that the cause of the power generation abnormality of the photovoltaic modules 710 is attributable to a decrease in solar irradiance.

In an embodiment, the processor may obtain information on the cause of the power generation abnormality based on the derived cause of the power generation abnormality of the photovoltaic module 710.

For example, the processor may visualize power generation data included in information on the photovoltaic module 710 according to an arrangement of the photovoltaic modules 710.

For example, when the cause of the power generation abnormality of the photovoltaic module 710 is attributable to the obstacle 720, the shadow caused by the obstacle 720 may include at least one of the photovoltaic modules 710 whose power generation has decreased. Accordingly, the processor may display the photovoltaic module 710 whose power generation has decreased as a shaded region, thereby visualizing the power generation data as if a shadow caused by the obstacle 720 is present.

That is, according to an arrangement of the photovoltaic modules 710, the processor may visualize the power generation data by displaying, as a shaded region, at least one photovoltaic module 710 whose power generation has decreased.

For example, the processor may derive information on the cause of the power generation abnormality based on the visualized power generation data.

For example, the processor may derive information on the cause of the power generation abnormality, such as a sun position at a corresponding time and a direction of a shadow, by using an installation location and an installation angle of the photovoltaic module 710, time-dependent sun position data, and the visualized power generation data.

For example, the processor may obtain, as output data from the power generation abnormality cause prediction model, the information on the cause of the power generation abnormality.

For example, the processor may determine that a cause of a decrease in power generation of the photovoltaic module 710 during a specific time period is attributable to shading and/or an obstacle, and may obtain, as the information on the cause of the power generation abnormality, a predicted direction of the obstacle and a predicted reduction amount in power generation of the photovoltaic module 710. For example, the processor may obtain, as the information on the cause of the power generation abnormality, that the cause of the decrease in the power generation of the photovoltaic module 710 is attributable to an obstacle, weather, or an error of the photovoltaic module itself.

In an embodiment, the processor may provide a notification to a user based on the obtained information on the cause of the power generation abnormality.

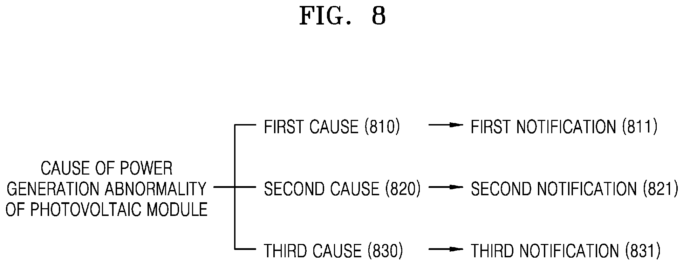

FIG. 8 is a diagram for describing an example of a method of providing, to a user, a notification based on a cause of a power generation abnormality of a photovoltaic module according to an embodiment.

Hereinafter, an example of a method by which the processor provides, to a user, a notification based on a cause of a power generation abnormality of a photovoltaic module will be described with reference to FIG. 8.

Referring to FIG. 8, the processor may provide, to the user, a notification based on a cause of a power generation abnormality of a photovoltaic module.

For example, based on information on a cause of a power generation abnormality, the processor may provide, to the user, a notification corresponding to the cause of the power generation abnormality of the photovoltaic module. Here, the cause of the power generation abnormality of the photovoltaic module may include a first cause 810 related to an obstacle, a second cause 820 related to weather, and a third cause 830 related to an error of the photovoltaic module.

For example, the processor may visualize the obtained information on the cause of the power generation abnormality and provide the visualized information to the user through a web or an application.

For example, the processor may determine, using the information on the cause of the power generation abnormality of the photovoltaic module, that a cause of a decrease in power generation of the photovoltaic module at a specific time period is any one of an obstacle, a weather change, or an error of the photovoltaic module itself, and may provide a notification related thereto to the user. That is, when the cause of the power generation abnormality of the photovoltaic module is not an obstacle or a weather change but an error of the photovoltaic module itself, such as a mechanical defect, the processor may provide a notification to the user indicating that a direct action is required.

As an example, when the cause of the power generation abnormality of the photovoltaic module is the first cause 810 related to an obstacle, the processor may provide a first notification 811 related to the obstacle to the user. For example, the first notification 811 related to the obstacle may include a warning notification regarding removal of the obstacle and a notification providing predicted location information for the obstacle, but is not limited thereto and may include any notification related to the obstacle.

For example, the processor may provide, to the user, as the first notification 811 related to an obstacle, a notification that prompts the user to remove an obstacle located around a specific photovoltaic module whose power generation has decreased. More specifically, the processor may provide, to the user, a notification including a location of the specific photovoltaic module whose power generation has decreased and a predicted location or direction of the obstacle, so that the user may check for the presence of the obstacle and remove the obstacle.

As another example, when the cause of the power generation abnormality of the photovoltaic module is the second cause 820 related to weather, the processor may provide a second notification 821 related to weather to the user. For example, the second notification 821 related to weather may include a notification of current weather information, such as cloud amount, solar irradiance, rainfall amount, and snowfall amount, and is not limited thereto, and may include any notification related to weather.

For example, the processor may, as the second notification 821 related to weather, provide a notification to the user by visualizing current weather information such as a position of the sun, a position of clouds, and a precipitation amount, as information on the cause of a decrease in power generation of the photovoltaic module.

In some embodiments, when power generation of the photovoltaic module is reduced due to simple causes such as snow, rain, clouds, or insufficient solar irradiance and unnecessary notifications are repeatedly generated within a short period of time, the processor may not provide notifications subsequent to the initially provided second notification 821 related to weather to the user. That is, when weather conditions such as rainfall, snowfall, or cloudy weather continue for a certain period of time, the power generation of the photovoltaic module may continuously decrease, and accordingly, the second notification 821 related to weather may be continuously provided to the user. However, the user may not need notifications provided after the initially provided second notification 821 related to weather. Accordingly, when the power generation abnormality of the photovoltaic module due to weather continues, the processor may provide the second notification 821 related to weather only once initially, or may provide the second notification 821 related to weather at preset time intervals.

As another example, when the cause of the power generation abnormality of the photovoltaic module is the third cause 830 related to an error of the photovoltaic module, the processor may provide a third notification 831 related to an error of the photovoltaic module to the user. For example, the third notification 831 related to an error of the photovoltaic module may include a notification related to an error of the photovoltaic module, such as a cause of a mechanical defect of the photovoltaic module.

For example, when the cause of the power generation abnormality of the photovoltaic module corresponds to neither the first cause 810 related to an obstacle nor the second cause 820 related to weather, the processor may determine that the cause of the power generation abnormality of the photovoltaic module corresponds to the third cause 830 related to an error of the photovoltaic module. Accordingly, the processor may derive a cause of the error of the photovoltaic module and provide, to the user, a notification regarding the cause of the error of the photovoltaic module, such as an error of the photovoltaic module, a gateway, or a connector.

For example, the processor may accumulate and analyze the information on the cause of the power generation abnormality to quantitatively and qualitatively analyze the cause of a decrease in power generation of the photovoltaic module, and may visualize analysis results and provide the analysis results to the user. In addition, by receiving such analysis results, the user may more efficiently operate and maintain the photovoltaic power generation system.

The above-described method may be embodied as a program executable on a computer and may be implemented in a general-purpose digital computer that operates the program using a computer-readable recording medium. In addition, a data structure used in the above-described method may be recorded on the computer-readable recording medium through various means. Examples of the computer-readable recording medium include storage media such as ROM, RAM, USB memory, floppy disks, hard disks, and the like, and optical reading media such as CD-ROMs and DVDs.

It will be understood by those skilled in the art to which the present embodiment pertains that the present disclosure may be implemented in modified forms without departing from the spirit and scope of the present disclosure. Therefore, the disclosed methods should be considered in an illustrative aspect rather than a restrictive aspect. The scope of the present disclosure is defined by the appended claims rather than the foregoing description, and all differences within the scope equivalent to the claims should be construed as being included in the present disclosure.

## Claims

1. A method of obtaining information on a cause of a power generation abnormality of a photovoltaic module, the method comprising:
inputting, as input data to a power generation abnormality cause prediction model, information on a photovoltaic module and information related to a sun into the power generation abnormality cause prediction model;
determining whether a power generation abnormality of the photovoltaic module has occurred based on the information on the photovoltaic module and the information related to the sun;
deriving information on a cause of the power generation abnormality of the photovoltaic module based on a result of the determining of whether the power generation abnormality has occurred; and
obtaining, as output data from the power generation abnormality cause prediction model, the information on the cause of the power generation abnormality.

2. The method of claim 1, wherein
the information on the photovoltaic module includes installation location information, installation angle information, and power generation data of the photovoltaic module, and
the information related to the sun includes position information of the sun and solar irradiance data.

3. The method of claim 2, wherein the inputting includes:
obtaining the installation location information of the photovoltaic module from the photovoltaic module;
calculating the position information of the sun and the solar irradiance data based on the installation location information of the photovoltaic module; and
inputting the information on the photovoltaic module, the position information of the sun, and the solar irradiance data into the power generation abnormality cause prediction model.

4. The method of claim 1, wherein the determining includes:
deriving a power generation variation pattern of the photovoltaic module over time based on the information on the photovoltaic module and the information related to the sun; and
determining whether the power generation abnormality has occurred using the power generation variation pattern.

5. The method of claim 1, wherein the deriving includes:
deriving the cause of the power generation abnormality based on the result of the determining of whether the power generation abnormality has occurred; and
obtaining the information on the cause of the power generation abnormality based on the derived cause of the power generation abnormality.

6. The method of claim 5, wherein the deriving includes:
visualizing power generation data included in the information on the photovoltaic module according to an arrangement of a plurality of photovoltaic modules including the photovoltaic module; and
deriving the information on the cause of the power generation abnormality based on the visualized power generation data.

7. The method of claim 1, wherein training of the power generation abnormality cause prediction model is performed by:
preprocessing for adjusting the information on the photovoltaic module and the information related to the sun to a same scale; and
training the power generation abnormality cause prediction model to derive the information on the cause of the power generation abnormality by using, as training data for the power generation abnormality cause prediction model, the preprocessed information on the photovoltaic module and the preprocessed information related to the sun.

8. The method of claim 1, further comprising providing, to a user, a notification
corresponding to the cause of the power generation abnormality of the photovoltaic module based on the information on the cause of the power generation abnormality,
wherein the cause of the power generation abnormality of the photovoltaic module includes a first cause related to an obstacle, a second cause related to weather, and a third cause related to an error of the photovoltaic module.

9. A computer-readable recording medium having recorded thereon a program for causing a computer to execute the method of claim 1.

10. An apparatus for obtaining information on a cause of a power generation abnormality of a photovoltaic module, the apparatus comprising:
a memory in which at least one program is stored; and
at least one processor configured to execute the at least one program,
wherein the at least one processor is configured to input, as input data to a power generation abnormality cause prediction model, information on the photovoltaic module and information related to a sun into the power generation abnormality cause prediction model, determine whether a power generation abnormality of the photovoltaic module has occurred based on the information on the photovoltaic module and the information related to the sun, derive information on a cause of the power generation abnormality of the photovoltaic module based on a result of determining whether the power generation abnormality has occurred, and obtain, as output data from the power generation abnormality cause prediction model, the information on the cause of the power generation abnormality.

11. The apparatus of claim 10, wherein
the information on the photovoltaic module includes installation location information, installation angle information, and power generation data of the photovoltaic module, and
the information related to the sun includes position information of the sun and solar irradiance data.

12. The apparatus of claim 11, wherein the at least one processor is configured to obtain the installation location information of the photovoltaic module from the photovoltaic module, calculate the position information of the sun and the solar irradiance data based on the installation location information of the photovoltaic module, and input the information on the photovoltaic module, the position information of the sun, and the solar irradiance data into the power generation abnormality cause prediction model.

13. The apparatus of claim 10, wherein the at least one processor is configured to derive a power generation variation pattern of the photovoltaic module over time based on the information on the photovoltaic module and the information related to the sun, and determine whether the power generation abnormality has occurred using the power generation variation pattern.

14. The apparatus of claim 10, wherein the at least one processor is configured to derive the cause of the power generation abnormality based on the result of determining whether the power generation abnormality has occurred, and obtain the information on the cause of the power generation abnormality based on the derived cause of the power generation abnormality.

15. The apparatus of claim 14, wherein the at least one processor is configured to visualize power generation data included in the information on the photovoltaic module according to an arrangement of a plurality of photovoltaic modules including the photovoltaic module, and derive the information on the cause of the power generation abnormality based on the visualized power generation data.

16. The apparatus of claim 10, wherein training of the power generation abnormality cause prediction model is performed by preprocessing for adjusting the information on the photovoltaic module and the information related to the sun to a same scale, and training the power generation abnormality cause prediction model to derive the information on the cause of the power generation abnormality by using, as training data for the power generation abnormality cause prediction model, the preprocessed information on the photovoltaic module and the preprocessed information related to the sun.

17. The apparatus of claim 10, wherein
the at least one processor is further configured to provide, to a user, a notification corresponding to the cause of the power generation abnormality of the photovoltaic module based on the information on the cause of the power generation abnormality, and
the cause of the power generation abnormality of the photovoltaic module includes a first cause related to an obstacle, a second cause related to weather, and a third cause related to an error of the photovoltaic module.
